# EUROPÄISCHE PATENTSCHRIFT

(11) **EP 2 752 106 B1**
(45) Veröffentlichungstag und Bekanntmachung des Hinweises auf die Patenterteilung: **27.10.2021**
(21) Anmeldenummer: 13188825.7
(22) Anmeldetag: 16.10.2013
(51) Int. Cl.: G07C 5/08, A01B 76/00

(54) **Einrichtung zur Ableitung des Betriebszustands einer landwirtschaftlichen Arbeitsmaschine**
Device for deriving the operating state of an agricultural working machine
Dispositif pour déterminer l'état de fonctionnement d'une machine de travail agricole

(30) Priorität: 05.11.2012 DE 102012220109
(43) Veröffentlichungstag der Anmeldung: 09.07.2014
(73) Patentinhaber: Deere & Company, Moline, IL 61265 (US)
(72) Erfinder: Beck, Folker, 66509 Rieschweiler (DE); Blank, Sebastian, 67657 Kaiserslautern (DE); Kneip Prof. Dr., Frank, 66892 Bruchmühlbach-Miesau (DE)
(74) Vertreter: Holst, Sönke

(56) Entgegenhaltungen:
- US-A1- 2012 185 728
- Sebastian Blank ET AL: "A Modular Sensor Fusion Approach for Agricultural Machines", , 30. Juni 2011 (2011-06-30), Seiten 1-12, XP055121815, Gefunden im Internet: URL:http://www.nas.boku.ac.at/fileadmin/da ta/H03000/H93000/H93100/CIOSTA_Presentatio ns/Blank.pdf [gefunden am 2014-06-05]

## Beschreibung

Die Erfindung betrifft eine Einrichtung zur Ableitung einer Information über den Betriebszustand einer Arbeitsmaschine anhand von Signalen von Sensoren, umfassend:
einen oder mehrere Sensoren zur Bereitstellung jeweils eines Ausgangswerts hinsichtlich eines aktuellen Parameters einer Komponente der Arbeitsmaschine,
eine mit den Sensoren verbundene Verarbeitungseinheit, die programmiert ist, anhand des oder der Messwerte der Sensoren und/oder daraus abgeleiteter Werte unter Verwendung eines Hidden-Markov-Modells eine Information über den Betriebszustand der Arbeitsmaschine abzuleiten,
wobei die Verarbeitungseinheit mit einer Zustandsübergangsmatrix A, Elementen einer Emissionswahrscheinlichkeitsmatrix B für die Wahrscheinlichkeit, dass eine Beobachtung durch einen bestimmten Zustand bedingt ist und einem Vektor π zur Beschreibung eines Eingangszustands beaufschlagbar ist, um daraus den Betriebszustand S der Arbeitsmaschine abzuleiten,
wobei der abgeleitete Betriebszustand einem Bediener auf einem Anzeigefeld einer Bedienereingabeeinrichtung anzeigbar ist und/oder georeferenziert abspeicherbar ist und/oder zur Ansteuerung von Komponenten der Arbeitsmaschine dient,
und die Verarbeitungseinheit programmiert ist, Elemente der

Emissionswahrscheinlichkeitsmatrix B aus den aktuell vorliegenden Messwerten des oder der Sensoren abzuleiten.

### Stand der Technik

Arbeitsmaschinen werden derzeit mit immer mehr Aktoren und Sensoren ausgestattet, die zum Antrieb beweglicher Elemente dienen. Dies trifft insbesondere für landwirtschaftliche Arbeitsmaschinen zu, wie selbstfahrende Erntemaschinen und Traktoren, die mit unterschiedlichen Zusatzausrüstungen betrieben werden können, wie Erntevorsätzen für Erntemaschinen oder gezogenen oder angebauten Geräten z.B. zur Bodenbearbeitung, zum Säen oder zur Ernte für Traktoren. Um dem Bediener oder einer beabstandeten Stelle eine Information darüber zu geben, ob alle Komponenten der Arbeitsmaschine korrekt arbeiten, und/oder zur selbsttätigen Ansteuerung von Komponenten basierend auf dem jeweiligen Betriebszustand der Arbeitsmaschine wurde vorgeschlagen (Sebastian Blank, Georg Kormann, Karsten Berns: A Modular Sensor Fusion Approach for Agricultural Machines, XXXVI CIOSTA & CIGR Section V Conference, Juni 2011 - Wien, im Internet veröffentlicht unter http://www.nas.boku.ac.at/fileadmin/ /H93/H931/CIOSTA Presentations/Blank.pdf), den Betriebszustand der Arbeitsmaschine mittels einer Mehrzahl an Sensoren zu erfassen. Die Signale der Sensoren werden durch einen Sensorwissensmanager angeglichen und mittels eines Fusionsmoduls verschmolzen (fusioniert), um eine gegenüber den einzelnen Sensorwerten verminderte, jedoch genauere Datenmenge zu erzielen. Dann werden die fusionierten Daten einer Fuzzy-Klassifikation unterzogen und das Ergebnis dieser Klassifikation wird unter Verwendung eines Hidden-Markov-Modells (HMM) analysiert, um schließlich eine Information über den jeweiligen Betriebszustand der Arbeitsmaschine zu gewinnen. Dem Sensorwissensmanagerwerden aus einer Sensorwissens-Datenbank Informationen über die einzelnen Sensoren zugeführt, die zur Verschmelzung der Sensordaten benötigt werden. Dem Fusionsmodul und dem Hidden-Markov-Modell werden weiteres, statisches Domänenwissen hinsichtlich der Konfiguration der Arbeitsmaschine aus einer gemeinsam genutzten Datenbank zugeführt, die einerseits zur Ableitung einer Regelbasis für die Fuzzy-Klassifikation und andererseits zur Auswertung der Daten durch das Hidden-Markov-Modell dienen.

Aus mathematischer Perspektive sind die HMMs eine Erweiterung normaler Markov-Ketten zur Überwindung der Beschränkung, dass jeder Übergangszustand mit einer physikalischen Beobachtung korrespondieren muss. Dieses Erfordernis beschränkt die Fälle, in denen ein temporäres probabilistisches Modell angewendet werden kann, beträchtlich. Zur Überwindung dieses Problems bestehen die HMM aus einer Struktur aus zwei verbundenen statistischen Prozessen, die ineinander eingebettet sind. Der erste, nicht beobachtbare Prozess ist eine Markovkette mit Zuständen und Übergangswahrscheinlichkeiten und der zweite, beobachtbare Prozess erzeugt zu jedem Zeitpunkt Emissionen, die auf dem derzeitigen, nicht beobachtbaren internen (ersten) Zustand basieren. Man verwendet den zweiten Prozess als Mittel zur Beobachtung des ersten Prozesses, der die weitestgehend unbekannte Struktur des unter Beobachtung befindlichen Prozesses emuliert.

Das Hidden-Markov-Modell λ lässt sich standardmäßig durch folgende fünf Größen beschreiben: λ= λ (S, A, B, π, V). Dabei ist S eine Menge an Zuständen (s₁ bis s_{N}) eines Modells, A eine Zustandsübergangsmatrix mit Elementen aᵢⱼ, B eine Emissionswahrscheinlichkeitsmatrix mit Elementen bⱼₖ für die Wahrscheinlichkeit, dass die Beobachtung vₖ durch den Zustand sⱼ bedingt ist, π ein Vektor zur Beschreibung eines Eingangszustands und V ein Beobachtungssymbolalphabet mit Elementen v₁ bis v_{M}. Basierend auf diesem Konzept kann eine Vielzahl an realen Problemen gehandhabt werden, die dadurch gekennzeichnet sind, dass ihre inneren Mechanismen teilweise nicht beobachtbar sind und somit nur stochastische Spezifikationen aus ihrem Verhalten abgeleitet werden können. Man leitet demnach den jeweiligen Zustand S des Modells aus der Beobachtung V ab, wozu der Eingangszustand π und die Matrizen A und B bekannt und insbesondere konstant (zeitlich invariant) sein müssen. Zu weiteren Details hierzu sei auf die Literatur verwiesen, z.B. L.R. Rabiner, A Tutorial on Hidden-Markov-Models and Selected Applications in Speech Recognition, Proc. IEEE Vol. 77 No. 2 (Feb. 1989), S. 257 ff.

Im oben erwähnten Stand der Technik von Blank et al. werden die Zustandsübergangsmatrix A, die Emissionswahrscheinlichkeitsmatrix B und der Eingangszustand π aus der Datenbank für statisches Domänenwissen entnommen. Das bedeutet einerseits einen relativ hohen Aufwand für eine anfängliche Erstellung der Matrix und andererseits eine gewisse Anfälligkeit für Fehler und/oder Toleranzen von Sensoren, denn diese sind in der statischen, vorab definierten Emissionswahrscheinlichkeitsmatrix B nicht eingerechnet.

Die als gattungsbildend angesehene US 2012/0185728 A1 beschreibt eine Erkennung eines Fehlers in einem System unter Verwendung eines dynamischen, Bayesianischen Netzwerks oder eines Hidden Markov Modells. Letzteres wird während des Betriebs oder während eines Fehlers mit Sensorwerten beaufschlagt und lernt demnach zunächst die Zusammenhänge zwischen den Sensorwerten und möglichen Fehlern. Während des sich daran anschließenden Betriebes soll es ggf. Fehler erkennen. Hier werden die Emissionswahrscheinlichkeiten durch Training gelernt, wobei im Falle widersprüchlicher Ergebnisse bei der Fehlerüberwachung eine Anpassung des Modells möglich ist. Es können verschiedene Modelle gleichzeitig laufen oder alternativ zueinander ausgewählt werden, z.B. für ein korrekt arbeitendes System oder ein defektes System.

### Aufgabe der Erfindung

Die der Erfindung zu Grunde liegende Aufgabe wird darin gesehen, eine Einrichtung zur Überwachung des Zustands einer Arbeitsmaschine und ein entsprechendes Verfahren dahingehend weiterzubilden, dass die erwähnten Nachteile des Standes der Technik nicht oder in einem verminderten Maße auftreten.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Einrichtung zur Überwachung des Betriebszustands einer Arbeitsmaschine umfasst einen Sensor oder eine Mehrzahl an Sensoren zur Bereitstellung jeweils eines Ausgangswert hinsichtlich eines aktuellen Parameters einer Komponente der Arbeitsmaschine und eine mit den Sensor(en) verbundene Verarbeitungseinheit, die programmiert ist, anhand der Messwerte der Sensor(en) und/oder daraus abgeleiteter Werte unter Verwendung eines Hidden-Markov-Modells eine Information über den Betriebszustand der Arbeitsmaschine abzuleiten. Die Verarbeitungseinheit ist mit einer Zustandsübergangsmatrix A, Elementen einer Emissionswahrscheinlichkeitsmatrix B für die Wahrscheinlichkeit, dass eine Beobachtung durch einen bestimmten Zustand bedingt ist und einem Vektor π zur Beschreibung eines Eingangszustands beaufschlagbar, um anhand der der Messwerte der Sensor(en) und/oder daraus abgeleiteter Werte (d.h. der jeweiligen Beobachtung) den Betriebszustand S der Arbeitsmaschine abzuleiten. Die Verarbeitungseinheit ist programmiert, Elemente der Emissionswahrscheinlichkeitsmatrix B aus den Messwerten des Sensors bzw. der Sensoren abzuleiten.

Die Einrichtung ist demnach in der Lage, aus den Signalen des oder der Sensoren unter Verwendung eines Hidden-Markov-Modells abzuleiten, welchen Betriebszustand die Arbeitsmaschine gerade hat. Im Fall eines Traktors mit angebautem Bodenbearbeitungsgerät kann die Einrichtung somit beispielsweise feststellen, ob das Bodenbearbeitungsgerät gerade den Boden bearbeitet oder nicht. Außerdem kann die Einrichtung erkennen, wenn der Traktor mit ausgehobenem Bodenbearbeitungsgerät auf einer Straße fährt oder im Vorgewende wendet. Optional könnten quantitative Werte, wie Arbeitstiefe, bearbeitete Fläche, Kraftstoffverbrauch, Verschleiß der Bodenbearbeitungswerkzeuge etc. evaluiert und ausgegeben werden. Das Hidden-Markov-Modell benötigt, wie eingangs beschrieben, eine Zustandsübergangsmatrix A, eine Emissionswahrscheinlichkeitsmatrix B mit Elementen für die Wahrscheinlichkeit, dass eine Beobachtung durch einen bestimmten Zustand bedingt ist und einen Vektor π zur Beschreibung eines Eingangszustands. Die Emissionswahrscheinlichkeitsmatrix B enthält definitionsgemäß Elemente bⱼₖ für die Wahrscheinlichkeit, dass die Beobachtung vₖ durch den Zustand sⱼ bedingt ist. Anstelle der fest abgespeicherten Emissionswahrscheinlichkeitsmatrix B werden Elemente der Emissionswahrscheinlichkeitsmatrix B aus Messwerten des oder der Sensoren abgeleitet, d.h. die gemessenen Emissionen des zweiten Prozesses werden mit den unterschiedlichen Zuständen des ersten Prozesses verknüpft oder korreliert, um Elemente der Emissionswahrscheinlichkeitsmatrix B zu bestimmen.

Auf diese Weise kann sich die Einrichtung selbsttätig an besondere Situationen, wie variierende Qualitäten der Sensordaten, Unsicherheiten der Messwerte oder Sensorfehler beispielsweise bei Überhitzung und Sensorausfälle anpassen.

Vorzugsweise ist die Verarbeitungseinheit programmiert, die besagten Elemente der Emissionswahrscheinlichkeitsmatrix B ganz oder teilweise aus fuzzifizierten Messwerten von Sensoren abzuleiten, die dem Hidden-Markov-Modell als Beobachtung zuführbar sind. Es wäre aber auch eine beliebige andere Vorklassifizierung oder Vorverarbeitung der Sensorwerte möglich, wie Clustering-Ansätze, Support Vector Machines, neuronale Netze, oder probabilitische Ansätze. Zusätzlich oder alternativ kann die Verarbeitungseinheit die erwähnten Elemente der Emissionswahrscheinlichkeitsmatrix B ganz oder teilweise aus Messwerten von Überwachungssensoren zur Erfassung des Zustands von Sensoren und/oder zur Überwachung eines Bedieners ableiten.

Die Verarbeitungseinheit ist programmiert, ein Modell für die jeweilige Betriebsart der Arbeitsmaschine anhand von Messwerten von Sensoren und eines Positionsbestimmungssystems unter Modellen für Feldarbeit, Straßenfahrt, Wartung und Annäherung an ein Vorgewende auszuwählen und die Zustandsübergangsmatrix A und den Vektor π anhand des ermittelten Modells aus einer Datenbank, in welcher unterschiedliche Zustandsübergangsmatrizen für unterschiedliche Betriebsarten der Arbeitsmaschine abgelegt sind, auszuwählen. Es werden demnach mehrere, unterschiedliche Zustandsübergangsmatrizen A und/oder Vektoren π in einer Datenbank abgespeichert und bei jedem Durchlauf einer Zustandsabschätzungsschleife entschieden, welche Zustandsübergangsmatrix A und/oder welcher Vektor π nun verwendet werden soll.

Die Entscheidung hinsichtlich des Modells für die Betriebsart kann basierend auf den Signalen eines Positionsbestimmungssystems zur Feststellung des Landes und der Region (um festzustellen, welche landwirtschaftlichen Praktiken dort üblich sind) und/oder zur Bestimmung der Position der Arbeitsmaschine im Feld insbesondere zwecks Unterscheidung zwischen Vorgewende und eigentlichem Feldbetrieb erfolgen. Zusätzlich kann das Modell für die Betriebsart anhand der Position eines Schalters zum Umschalten zwischen Straßen- und Feldbetrieb erkannt werden, oder es wird erkannt, ob gerade eine Wartung der Arbeitsmaschine stattfindet. Auch kann festgestellt werden, ob sich ein Fahrer an Bord befindet oder nicht, oder ob die Arbeitsmaschine gerade selbsttätig gelenkt wird.

Weiterhin können Elemente der Zustandsübergangsmatrix A online modifiziert werden. Diese Elemente werden demnach nicht direkt aus der statischen Datenbank entnommen, sondern erst während des Betriebs berechnet. So besteht die Möglichkeit, beim Annähern an das Vorgewende die Wahrscheinlichkeit für einen Wendevorgang zu vergrößern und die Wahrscheinlichkeit für eine Transportfahrt auf dem Feld zu verkleinern, was zu entsprechend ansteigenden bzw. absinkenden Wahrscheinlichkeiten in der Zustandsübergangsmatrix A führt. Es wird demnach nicht mehr nur ein einziges Modell für den Betriebszustand verwendet, sondern mehrere derartige Modelle gleichzeitig, denen jeweils Wahrscheinlichkeiten zugeordnet werden, und die Zustandsübergangsmatrix A und der Eingangszustand π werden entsprechend ausgewählt.

Die Verarbeitungseinheit kann programmiert sein, einen Nachverfolgungsschritt zur Bestimmung des Betriebszustands der Arbeitsmaschine nur dann auszuführen, wenn seit einem vorherigen Nachverfolgungsschritt eine andere Zustandsübergangsmatrix A und/oder ein anderer Vektor π ausgewählt wurde.

Insbesondere kann die Verarbeitungseinheit den Zeitpunkt des Nachverfolgungsschritts abhängig von den Diagonalelementen der Zustandsübergangsmatrix A bestimmen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer landwirtschaftlichen Maschine in Form eines Traktors mit einer gezogenen Bestellkombination,
- Fig. 2: ein Diagramm einer Steuereinrichtung mit den angeschlossenen Komponenten zur Kontrolle der Aktoren der Bestellkombination und einer Verarbeitungseinrichtung zur Erfassung des Betriebszustands des Traktors und der Bestellkombination, und
- Fig. 3: ein Flussdiagramm, nach dem die Verarbeitungseinrichtung vorgeht.

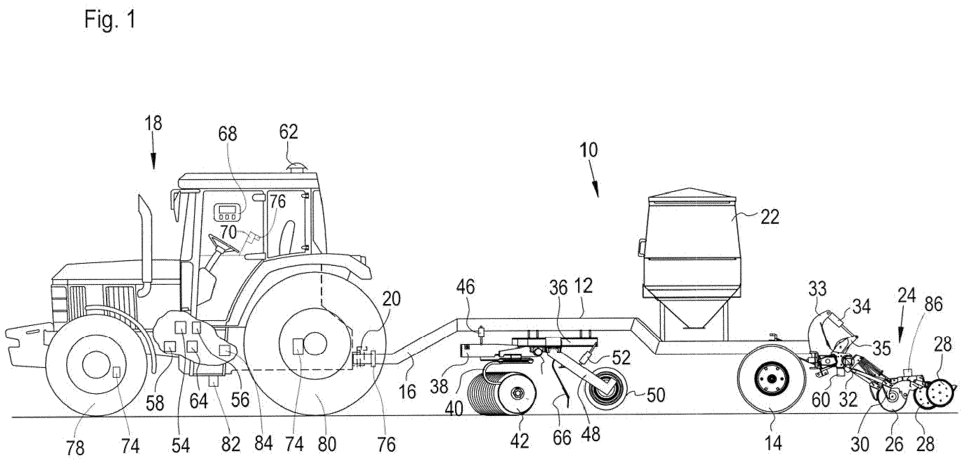

In der Figur 1 ist eine landwirtschaftliche Arbeitsmaschine in Form eines Traktors 18 mit einer durch den Traktor 18 gezogenen Bestellkombination 10 dargestellt. Die Bestellkombination umfasst einen sich in der Vorwärtsrichtung, die in der Zeichnung von rechts nach links verläuft, erstreckenden Rahmen 12, der sich über ein Laufräder 14 umfassendes Fahrwerk auf dem Erdboden abstützt. An seinem vorderen Ende ist der Rahmen 12 über eine Deichsel 16 über eine lösbare Kupplung 20 mit dem Traktor 18 verkuppelt.

Der Rahmen 12 trägt vor den Laufrädern 14 einen Saatgutbehälter 22 zur Aufnahme von Saatgut. Durch, in der Zeichnung nicht dargestellte Messsysteme wird das Saatgut aus dem Saatgutbehälter 22 abgemessen und über Saatgutleitungen an der Rückseite des Rahmens 12 angeordneten Säeinrichtungen 24 zugeführt, die einen Furchenöffner 26 in Form einer Scheibe, Säschare 30, die das Saatgut in die durch den Furchenöffner 26 erzeugte Furche abgeben und Schließräder 28 zum anschließenden Schließen der Furche umfassen.

Es sind mehrere Säeinrichtungen 24 seitlich nebeneinander an einem sich am Rahmen 12 abstützenden, sich quer zur Vorwärtsrichtung erstreckenden Werkzeugträger 32 abgestützt. Die Säeinrichtungen 24 sind um eine parallel zur Längsachse des Werkzeugträgers 32 verlaufende Achse schwenkbar gelagert. Der Schwenkwinkel aller Säeinrichtungen 24 und damit die Sätiefe wird durch einen Aktor 34 in Form eines Hydraulikzylinders festgelegt, der sich zwischen einer mit dem Rahmen 12 verbundenen Halterung 33 und einem mit den Säeinrichtungen 24 gekoppelten Arm 35 erstreckt.

Vor dem Saatgutbehälter 22 ist unterhalb des Rahmens 12 ein Trägerrahmen 36 befestigt. Der Trägerrahmen 36 haltert einen um eine horizontale, quer zur Vorwärtsrichtung verlaufende Schwenkachse 44 schwenkbaren Schwenkrahmen 38, an dem sich über eine U-förmige Feder 40 ein Bodenbearbeitungswerkzeug 42 in Form einer Scheibenegge abstützt. Ein zwischen Rahmen 12 und Schwenkrahmen 38 angeordneter Aktor 46 in Form eines Hydraulikzylinders definiert den Schwenkwinkel des Schwenkrahmens 38 um die Schwenkachse 44. Der Aktor 46 ist mit einem einstellbaren Druck betreibbar und steuert auf diese Weise den Druck, mit dem das Bodenbearbeitungswerkzeug 42 auf den Erdboden einwirkt. Anstelle der Scheibenegge kann ein beliebiges anderes Bodenbearbeitungswerkzeug 42 verwendet werden.

Am Trägerrahmen 36 ist weiterhin in Vorwärtsrichtung hinter dem Bodenbearbeitungswerkzeug 42 eine, um eine parallel zur Schwenkachse 44 verlaufende Achse schwenkbare Halterung 48 angelenkt, an deren unterem Ende eine Bodenwalze 50 in Form eines Reifenpackers angebracht ist. Ein Aktor 52 in Form eines Hydraulikzylinders, der sich zwischen dem Trägerrahmen 36 und der Halterung 48 erstreckt, definiert den Schwenkwinkel der Halterung 48. Der Aktor 52 ist mit einem einstellbaren Druck beaufschlagbar und steuert auf diese Weise den Druck, mit dem die Bodenwalze 42 auf den Erdboden einwirkt.

An beiden seitlichen Enden des Bodenbearbeitungswerkzeugs 42 sind mit dem Schwenkrahmen 38 verbundene U-förmige Federn 40 angeordnet. Auch sind Halterungen 48 an beiden seitlichen Enden der Bodenwalze 50 angeordnet und mit dem Trägerrahmen 36 verbunden. Das Bodenbearbeitungswerkzeug 42 und die Bodenwalze 50 können sich aus drei oder mehr seitlich nebeneinander angeordneten Abschnitten zusammensetzen, von denen die Äußeren, in an sich bekannter Weise, zum Straßentransport hochklappbar sind. Dazu sind entsprechende Antriebe in Form von Hydraulikzylindern vorzusehen. Zwischen dem Bodenbearbeitungswerkzeug 42 und der Bodenwalze 50 ist ein Striegel 66 angeordnet, der mit dem Trägerrahmen 36 verbunden ist.

Die Bestellkombination 10 stellt nach alledem eine Kombination aus einer Sämaschine mit dem Saatgutbehälter 22 und den Säeinrichtungen 24 einerseits und einem Bodenbearbeitungsgerät mit dem Bodenbearbeitungswerkzeug 42, dem Striegel 66 und der Bodenwalze 50 andererseits dar.

Der Traktor 18 ist mit einer Steuereinrichtung 54 ausgestattet, die eingerichtet ist, über in der Zeichnung nicht dargestellte Leitungen die Aktoren 34, 46 und 52 mittels einer vorzugsweise Proportionalventile enthaltenden Ventileinrichtung 56 aus einer Quelle 58 unter Druck stehenden Hydraulikfluids mit Hydraulikfluid zu beaufschlagen bzw. zu entlasten. In der dargestellten Ausführungsform sind die Aktoren 34, 46 und 52 doppeltwirkend, um die Arbeitselemente der Bestellkombination 10 im Vorgewende oder bei einer Straßenfahrt ausheben zu können. Denkbar wäre aber auch die Verwendung einfachwirkender Hydraulikzylinder. Die Steuereinrichtung 54 ist somit eingerichtet, den Druck der Aktoren 46 und 52 vorzugeben. Eine Information über die Position des Aktors 34 wird der Steuereinrichtung 54 über einen Fühler 60 zugeführt, so dass die Sätiefe der Säeinrichtungen 24 durch die Steuereinrichtung 54 mittels der Ventileinrichtung 56 regelbar ist.

Die Ventileinrichtung 56 kann sich an Bord des Traktors 18 befinden, wie in der Figur 1 gezeigt, oder an Bord der Bestellkombination 18. Im zweiten Fall wäre sie mit der Steuereinrichtung 54 über ein Bussystem, z.B. einen ISO-Bus, verbunden, das auch die Verbindung zwischen der Steuereinrichtung 54 und dem Aktor 86 und dem Fühler 60 herstellt. Außerdem könnte auch die Steuereinrichtung 54 an Bord der Bestellkombination 10 angeordnet sein und nur die Bedienereingabeeinrichtung 68 als virtuelles Terminal an Bord des Traktors 18 positioniert und über ein Bussystem mit der Steuereinrichtung 54 (und ggf. mit einer weiteren Verarbeitungseinrichtung des Traktors 18, die den Aktor 84 und die Ventileinrichtung 56 kontrolliert) verbunden werden.

Ein Geschwindigkeitssensor 74 erfasst die Drehzahl eines vorderen Rades 78 oder rückwärtigen Rades 80 des Traktors 18 und führt seine Signale ebenfalls der Steuereinrichtung 54 zu. Die Geschwindigkeit des Traktors 18 über dem Erdboden kann auch mittels eines Radarsensors 82 erfasst werden.

Ein Aktor 84 in Form einer Geschwindigkeitsvorgabeeinrichtung ist mit der Steuereinrichtung 54 verbunden und dient zur Vorgabe der Vorwärtsgeschwindigkeit des Traktors 18, indem er die Drehzahl des Antriebsmotors des Traktors 18 und/oder der Getriebeübersetzung zwischen dem Antriebsmotor und den antreibbaren Rädern 78 und/oder 80 verstellt. Ein Aktor 86 gibt den Abstand vor, in welchem die Säeinrichtungen 24 Saatgut im Erdboden ablegen. Der Aktor 86 kann beispielsweise zum Antrieb der Messsysteme der Säeinrichtungen 24 oder zur Veränderung von deren Drehzahl dienen.

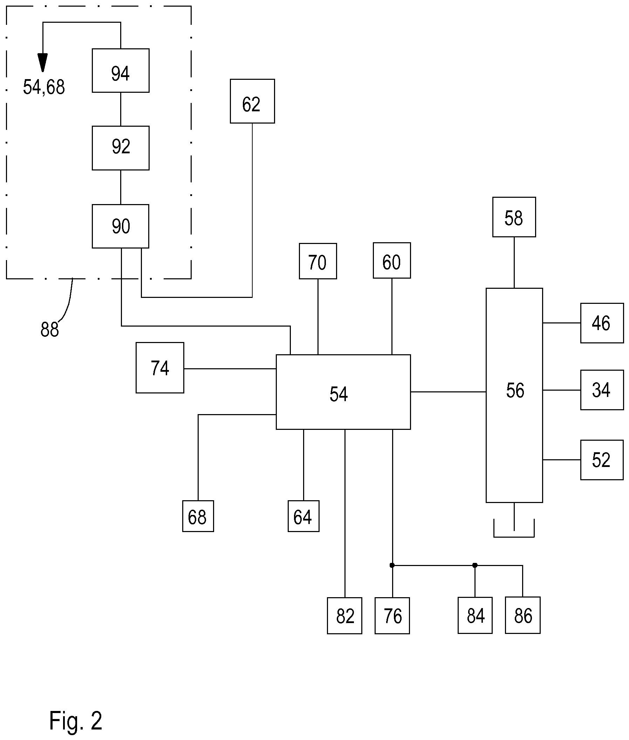

Schließlich ist am Arbeitsplatz des Traktors 18 noch eine Bedienereingabeeinrichtung 68 angebracht, die ebenfalls mit der Steuereinrichtung 54 verbunden ist. Die Steuereinrichtung 54 und die mit ihr verbundenen Komponenten einschließlich einer Speichereinrichtung 64 sind in der Figur 2 schematisch dargestellt. Die Bedienereingabeeinrichtung 68 ermöglicht es dem in der Kabine des Traktors 18 sitzenden Bediener, verschiedene Arbeitsparameter der Bestellkombination 10 einzugeben, nämlich die Sätiefe (Verstellung des Aktors 34 mit Rückkopplung über den Fühler 60), den Bodendruck der Bodenwalze 50 (Aktor 52) und den Bodendruck des Bodenbearbeitungswerkzeugs 42 (Aktor 46). Der Bediener gibt die Vortriebsgeschwindigkeit des Traktors 18 über einen Fahrhebel 70 vor, der zur Ansteuerung des Aktors 84 dient. Abhängig von der jeweiligen Geschwindigkeitsvorgabe (Fahrhebel 70) oder der aktuellen Geschwindigkeit (Geschwindigkeitssensor 74 oder Radarsensor 82) wird auch der Aktor 86 angesteuert, um einen mit der Bedienereingabeeinrichtung 68 eingegebenen Abstand des Saatguts auf dem Feld zu erzielen. Das Ausheben der Werkzeuge der Bestellkombination 10 am Feldende mittels der Aktoren 34, 46, 52 erfolgt durch eine Vorgewendeeingabeeinrichtung 76 am Fahrhebel 70. Bei Betätigung einer ersten Taste der Vorgewendeeingabeeinrichtung 76 werden die Werkzeuge angehoben und bei Betätigung einer zweiten Taste der Vorgewendeeingabeeinrichtung 76 wieder abgesenkt.

Der Betrieb des Traktors 18 und der Bestellkombination 10 wird demnach bei der Feldarbeit manuell durch den Bediener in der Kabine des Traktors 18 gesteuert.

Zur Dokumentation des Betriebs des Traktors 18 und der Bestellkombination 10 ist eine Verarbeitungseinrichtung 88 vorgesehen, die mit der Steuereinrichtung 54 verbunden ist und den Betriebszustand des Traktors 18 und der Bestellkombination 10 erfasst und über die Zeit georeferenziert dokumentiert. Der Verarbeitungseinrichtung 88 werden von einem Positionsbestimmungssystem 62 mit einer Satellitenempfangsantenne, die zum Empfang von Signalen des GPS (Global Positioning Systems) eingerichtet ist, eine Information über die jeweilige Position des Traktors 18 enthaltende Signale zugeführt. Die Verbindung zwischen der Verarbeitungseinrichtung 88 und der Steuereinrichtung 54 kann, wie in der Figur 2 dargestellt, über eine separate Leitung erfolgen, oder sie erfolgt durch eine Bus-Leitung (nicht gezeigt), die sich über den Traktor 18 und vorzugsweise auch über die Bestellkombination 10 erstreckt und an welcher die Steuereinrichtung 54, die Verarbeitungseinrichtung 88 und die als virtuelles Terminal ausgeführte Bedienereingabeeinrichtung 68, sowie - wie oben erwähnt - ein Controller (nicht gezeigt) der Ventileinrichtung 56 und des Fühlers 60 angeschlossen sind. Auch das Positionsbestimmungssystem 62, die Vorgewendeeingabeeinrichtung 76, ein Sensor zur Erfassung der Position des Fahrhebels 70, der Geschwindigkeitssensor 74 und/oder der Radarsensor 82, der Aktor 84 und der Aktor 86 (bzw. ihnen zugeordnete Controller) können über diese Busleitung mit der Steuereinrichtung 54 kommunizieren.

Die Verarbeitungseinrichtung 88 erhält somit direkt und/oder über die Busleitung und/oder von der Steuereinheit 54 Informationen über die Ausgabe des Positionsbestimmungssystems 62, die Signale der Sensoren 70, 74, 82 und den Sollzustand der Aktoren 84 und 86 als Eingangssignale. Die Verarbeitungseinrichtung 88 umfasst ein Verschmelzungsmodul 90, in dem Eingangssignale unterschiedlicher Herkunft miteinander verschmolzen werden, um die Datenmenge zu reduzieren und genauere Daten zu erhalten. Beispielsweise können die Signale des Geschwindigkeitssensors 74, des Radarsensors 82, des Aktors 84 und des Fahrhebels 70 miteinander verschmolzen werden, um ein genaueres Signal über die Geschwindigkeit des Traktors 18 zu erhalten. Hierzu und zur Bereitstellung eventuell zur Verschmelzung erforderlicher Formatierungsdaten sei auf die Offenbarung der DE 10 2010 031 344 A1 verwiesen. Die verschmolzenen Daten werden dann einer Fuzzy-Klassifizierung 92 zugeführt, welche den Daten Wahrscheinlichkeiten zuordnet, dass sie in einzelne Klassen fallen. So kann anhand des vom Verschmelzungsmodul 90 gelieferten Geschwindigkeitswerts und der Daten vom Positionserfassungssystem 62 jeweils eine Wahrscheinlichkeit für folgende Zustände ausgegeben werden: "erfasster Leerlauf", "erfasste Transportfahrt auf einer Straße", "erfasste Transportfahrt auf dem Feld", "erfasste Feldarbeit" und "erfasster unbekannter Zustand".

Diese Fuzzy-klassifizierten Wahrscheinlichkeiten werden dann einem Hidden-Markov-Modell 94 zugeführt, unter Verwendung dessen die Verarbeitungseinrichtung 88 aus diesen Wahrscheinlichkeiten den Betriebszustand des Traktors 18 und der Bestellkombination 10 ableitet. Dieser Betriebszustand kann beispielsweise die Zustände "Leerlauf", "Transport auf einer Straße", "Transport auf dem Feld" und "Feldarbeit" umfassen. Dieser erfasste Betriebszustand kann dem Bediener auf einem Anzeigefeld der Bedienereingabeeinrichtung 68 angezeigt werden. Zusätzlich kann er (z.B. für Abrechnungszwecke eines Lohnunternehmers) mit den zugehörigen Zeiten abgespeichert werden, und/oder er kann zur Ansteuerung von Komponenten des Traktors 18 oder der Bestellkombination 10 dienen, z.B. zum Abstellen des Motors nach längerem Leerlauf.

Die beschriebene Vorgehensweise erscheint zunächst etwas umständlich, denn aus einigen vorliegenden Daten könnte der Betriebszustand direkt abgeleitet werden. Hierfür wäre aber eine aufwändige, sehr maschinenspezifische Programmierung erforderlich, da eine Kenntnis der Bedeutung der zur Erkennung des Betriebszustands notwendigen Daten erforderlich wäre. Die erfindungsgemäße Verarbeitungseinrichtung 88 zeichnet sich demgegenüber durch universelle Anwendbarkeit ohne an die jeweilige Maschine angepasste Programmierung aus. So ist eine Berücksichtigung von Details der Bestellkombination 10 nicht erforderlich, weshalb die Verarbeitungseinrichtung 88 ohne Neuprogrammierung auch an einem Traktor mit einer Spritze oder einer Sämaschine einsetzbar wäre. Durch die HMM-Verarbeitung kann weiterhin die zeitliche Abhängigkeit der Zustände beobachtet werden.

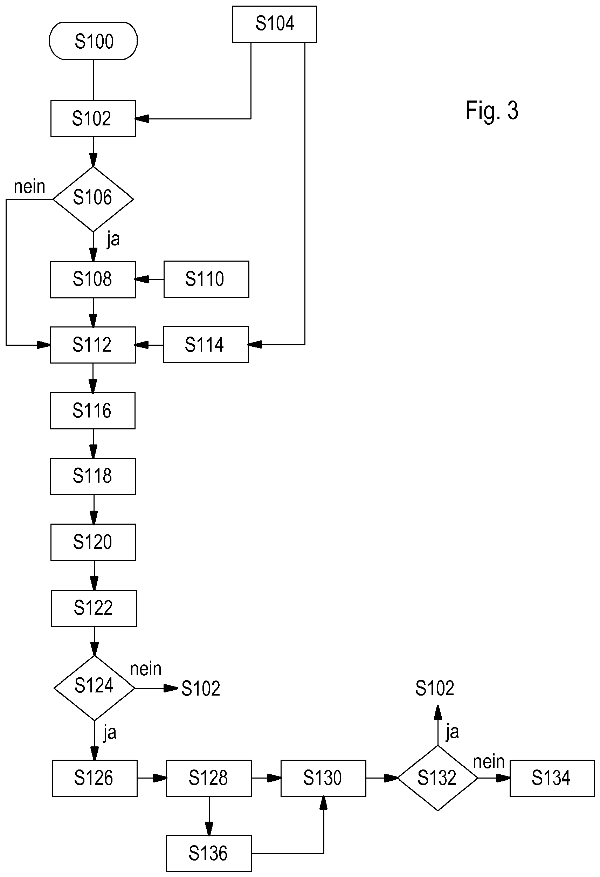

Der Betrieb der Verarbeitungseinrichtung 88 erfolgt wie in der Figur 3 dargestellt. Nach dem Start und der Initialisierung im Schritt S100 folgt der Schritt S102, in dem Daten für die Festlegung eines Modells evaluiert werden. Es wird somit ein Modell bestimmt, das die jeweilige Betriebsart des Traktors 18 charakterisiert. Die dafür verwendeten Daten können über die Busleitung (insbesondere Signale der Sensoren 70, 74, 82 und den Sollzustand der Aktoren 84 und 86), vom Positionsbestimmungssystem 62 und aus anderen Berechnungen abgeleitet werden (S104). Erfindungsgemäße Modelle sind "Feldarbeit", "Straßenfahrt", "Wartung", "Annäherung an Vorgewende". Die Entscheidung für eines der Modelle kann beispielsweise unter Verwendung der Signale des Positionsbestimmungssystems 62 und des Geschwindigkeitssensors 74 erfolgen, wobei anhand der Signale des Positionsbestimmungssystems 62 die Region und das Land des Traktoreinsatzes (und daraus ggf. spezifische, ländertypische Vorgehensweisen bei der Feldarbeit) und die Position des Traktors 18 gegenüber den Feldgrenzen abgeleitet werden können. Falls vorhanden, kann auch die Position eines Schalters zur Umschaltung zwischen Straßen- und Feldarbeit erfasst werden, der z.B. in der Bedienereingabeeinrichtung 68 integriert sein kann. Bei Wartungsarbeiten ist typischerweise eine Klappe geöffnet, deren Position erfasst werden kann, oder es wird erfasst, ob der Traktor 18 selbsttätig oder manuell gelenkt wird.

Es folgt der Schritt S106, in dem abgefragt wird, ob ein neues Modell verwendet werden soll, was anhand des bisherigen Modells und des im Schritt S102 bestimmten Modells entschieden wird. Wird ein neues Modell benötigt, folgt der Schritt S108, in dem aus einer Modelldatenbank (S110)― abhängig vom im Schritt S102 determinierten Modell - die dem Modell zugehörige Zustandsübergangsmatrix A und der Eingangszustand π ausgelesen werden.

Auf den Schritt S108 folgt dann der Schritt S112, in welchem dem Hidden-Markov-Modell 94 einerseits die externen Beobachtungen (Schritt S114) zugeführt werden, die von der Fuzzy-Klassifizierung 92 stammen. Der Schritt S114 kann optional Daten aus dem Schritt S104 (mit-) verwenden. Zusätzlich können Daten von einer Maschinenüberwachung, wie sie üblicherweise für telemetrische Zwecke zur Fernüberwachung des Maschinenzustands verwendet wird (Kontrolle von Motordrehzahl, Motortemperatur, Kraftstoffverbrauch etc.), einer Sensorzustandsüberwachung, die Ausgangswerte der Sensoren auf Plausibilität überprüft, und/oder einer Bedienerüberwachung, die mit einer Kamera in der Kabine die Tätigkeiten und Eingaben des Bedieners erfasst, im Schritt S114 erfasst und dem Schritt S112 zugeführt werden. Diese Daten dienen dem Hidden-Markov-Modell als Beobachtungen. Andererseits werden diese Daten dazu verwendet, die jeweils benötigten Elemente einer Spalte der jeweils verwendeten Emissionswahrscheinlichkeitsmatrix B für das Hidden-Markov-Modell online zu evaluieren. Die Elemente der Emissionswahrscheinlichkeitsmatrix B werden somit nicht aus einer vorab abgespeicherten Datenbank entnommen, sondern anhand der aktuellen Beobachtungen evaluiert. Das hat den Vorteil, dass variierenden Qualitäten der Sensoren und Unsicherheiten der Messwerte Rechnung getragen werden kann, auch können Auswirkungen von Sensorausfällen, Temperaturabhängigkeiten, Überhitzungen etc. ausgeglichen werden.

Der Schritt S112 wird auch durchlaufen, wenn der Schritt S106 ergeben hat, dass kein neues Modell zu verwenden ist.

Auf den Schritt S112 folgt der Schritt S116, bei dem es sich um den Vorwärtsschritt eines "Forward-Backward-Algorithmus" zur Auswertung des Hidden-Markov-Modells handelt. Es folgt der Schritt S118, in dem eine Skalierung der Zustandswahrscheinlichkeiten erfolgt, und der Schritt S120, in welchem die im Schritt S118 erhaltenen Daten in einen Stapelspeicher eingeschrieben werden. Im Schritt S122 werden dann die Bedingungen für den Nachverfolgungsschritt (Backtracking) zur Auswertung des Hidden-Markov-Modells berechnet. Es wird hierzu beispielsweise bestimmt, ob noch derselbe Zustand vorliegt wie beim letzten Durchlauf des Schritts S122 (d.h. alle Zustände denselben Vorgänger haben), ob der Stapelspeicher komplett gefüllt ist, ob der Traktor 18 ausgeschaltet ist, ob Datenverkehr auf der Busleitung vorliegt, ob eine Abbruchbedingung vorliegt, oder ob das Modell (Schritt S106) geändert wurde, und ob hinreichend Daten vorliegen, zwischen versteckten Zuständen zu unterscheiden. Weiterhin können die diagonalen Elemente der Zustandsübergangsmatrix A, die in Relation zur erwarteten Verweildauer in einem Zustand stehen, zur Bestimmung der Bedingungen für einen Nachverfolgungsschritt (Backtracking) verwendet werden. Ist eine oder mehrere dieser Bedingungen erfüllt, wird im nachfolgenden Schritt S124 auf den Schritt S126 weitergegangen, anderenfalls folgt wieder der Schritt S102. Es wird somit in den Schritten S122 und S124 online festgestellt, ob der Backtrackingschritt S126 durchgeführt wird oder nicht, wobei eine oder mehrere der in diesem Absatz erwähnten Konditionen abgefragt wird.

Im Schritt S126 erfolgt der Nachverfolgungsschritt (Backtracking), gefolgt vom Schritt S128, in welchem die Zustandsabschätzungsergebnisse in einem Speicher abgelegt werden. Darauf folgt der Schritt S130, in dem der Stapelspeicher zurückgesetzt wird, indem dessen Zeiger wieder auf den ersten Eintrag gelegt wird und optional alle beschriebenen Speicherelemente überschrieben werden, z.B. mit dem Wert 0 (null). Dann wird im Schritt S132 abgefragt, ob die Schleife noch einmal durchlaufen werden soll, und wenn das der Fall ist, folgt der Schritt S102, anderenfalls das Ende im Schritt S134. Auf den Schritt S128 kann (anstelle gleich zum Schritt S130 zu gehen) der Schritt S136 folgen, in welchem die ermittelten Daten (Hidden-Markov-Modell, Zustand, Abschätzung und Ergebnisse) gespeichert und zumindest der ermittelte Betriebszustand z.B. auf der Anzeige der Bedienereingabeeinrichtung 68 angezeigt werden.

Falls ein Stapelspeicher mit fester Größe verwendet wird, wird im Schritt 124 lediglich abgefragt, ob der Speicher voll ist und/oder eine Abbruchbedingung vorliegt und/oder der Traktor ausgeschaltet wird, und es folgt dann der Schritt 126 bzw. 102. Zu Details hinsichtlich des Viterbi-Algorithmus (Schritte S116 und S126) sei auf die Literatur verwiesen, insbesondere auf die eingangs erwähnte Veröffentlichung von L. Rabiner.

### Schritte der Figur 3

- S100: Start, Initialisierung
- S102: Daten zur Festlegung eines Modells evaluieren
- S104: externe Daten (CAN, GPS, berechnete Daten)
- S106: neues Modell ?
- S108: Modellauswahl (Zustandsübergangsmatrix A und Eingangszustand π)
- S110: Modelldatenbank für HMM
- S112: Beobachtung empfangen und Elemente der Emissionswahrscheinlichkeitsmatrix B bestimmen
- S114: externe Beobachtung (Ausgang von 92 etc.)
- S116: Vorwärtschritt (Viterbi)
- S118: Skalierung
- S120: Stapelspeichereintrag
- S122: Bedingungen für Backtracking berechnen
- S124: Backtracking durchführen?
- S126: Nachverfolgungschritt (Viterbi)
- S128: Abschätzungsergebnisse in Speicher schreiben
- S130: Stapelspeicher zurücksetzen
- S132: Schleife wieder durchlaufen?
- S134: Ende
- S136: Datenspeicherung und Ausgabe

## Patentansprüche

1. Einrichtung zur Ableitung des Betriebszustands einer landwirtschaftlichen Arbeitsmaschine (18, 10) anhand von Signalen von Sensoren (70, 74, 82), umfassend:
einen oder mehrere Sensoren (70, 74, 82) zur Bereitstellung jeweils eines Ausgangswerts hinsichtlich eines aktuellen Parameters einer Komponente der Arbeitsmaschine (18,10),
und eine mit den Sensoren (70, 74, 82) verbundene Verarbeitungseinheit (88), die programmiert ist, anhand der Messwerte des oder der Sensoren (70, 74, 82) und/oder daraus abgeleiteter Werte unter Verwendung eines Hidden-Markov-Modells (94) den Betriebszustand der Arbeitsmaschine (18, 10) abzuleiten,
wobei die Verarbeitungseinheit (88) mit einer Zustandsübergangsmatrix (A), Elementen einer Emissionswahrscheinlichkeitsmatrix (B) für die Wahrscheinlichkeit, dass eine Beobachtung durch einen bestimmten Zustand bedingt ist, und einem Vektor (π) zur Beschreibung eines Eingangszustands beaufschlagbar ist, um daraus den Betriebszustand (S) der Arbeitsmaschine (18, 10) abzuleiten, und der abgeleitete Betriebszustand einem Bediener auf einem Anzeigefeld einer Bedienereingabeeinrichtung (68) anzeigbar ist und/oder zur Ansteuerung von Komponenten der Arbeitsmaschine (18, 10) dient,
**dadurch gekennzeichnet, dass** die Verarbeitungseinheit (88) programmiert ist, Elemente der Emissionswahrscheinlichkeitsmatrix (B) aus den Messwerten des oder der Sensoren (70, 74, 82) abzuleiten, und dass die Verarbeitungseinheit (88) programmiert ist, ein Modell für die jeweilige Betriebsart der Arbeitsmaschine (18, 10) anhand von Messwerten von Sensoren (70, 74, 82) und eines Positionsbestimmungssystems (62) unter Modellen für Feldarbeit, Straßenfahrt, Wartung und Annäherung an ein Vorgewende auszuwählen und die Zustandsübergangsmatrix (A) und/oder den Vektor (π) anhand des ausgewählten Modells für die Betriebsart aus einer Datenbank, in welcher unterschiedliche Zustandsübergangsmatrizen (A) und/oderVektoren (π) für unterschiedliche Betriebsarten der Arbeitsmaschine (18, 10) abgelegt sind, auszuwählen.

2. Einrichtung nach Anspruch 1, wobei die Verarbeitungseinheit (88) programmiert ist, die Elemente der Emissionswahrscheinlichkeitsmatrix (B) aus fuzzifizierten Messwerten von Sensoren (70, 74, 82) abzuleiten, die dem Hidden-Markov-Modell (94) als Beobachtung zuführbar sind.

3. Einrichtung nach Anspruch 1 oder 2, wobei die Verarbeitungseinheit (88) programmiert ist, die Elemente der Emissionswahrscheinlichkeitsmatrix (B) aus Messwerten einer Sensorzustandsüberwachung zur Erfassung des Zustands von Sensoren und/oder einer Einrichtung zur Überwachung eines Bedieners abzuleiten.

4. Einrichtung nach einem der Ansprüche 1 bis 3, wobei die Verarbeitungseinheit (88) programmiert ist, Elemente der Zustandsübergangsmatrix (A) während des Betriebs zu berechnen.

5. Einrichtung nach einem der Ansprüche 1 bis 4, wobei die Verarbeitungseinheit (88) programmiert ist, einen Nachverfolgungsschritt (Backtrackingschritt) zur Auswertung des Hidden-Markov-Modells zur Bestimmung des Betriebszustands der Arbeitsmaschine (18, 10) nur dann auszuführen, wenn seit einem vorherigen Nachverfolgungsschritt eine andere Zustandsübergangsmatrix (A) und/oder ein anderer Vektor (π) ausgewählt wurde

6. Einrichtung nach Anspruch 5, wobei die Verarbeitungseinheit (88) programmiert ist, den Zeitpunkt des Nachverfolgungsschritts abhängig von den Diagonalelementen der Zustandsübergangsmatrix (A) zu bestimmen.

7. Landwirtschaftliche Arbeitsmaschine (18, 10) mit einer Einrichtung nach einem der vorhergehenden Ansprüche.

8. Arbeitsmaschine nach Anspruch 7 in Form eines Traktors (18) mit einem Arbeitsgerät (10) oder in Form einer Erntemaschine.

## Claims

1. Device for deriving the operating state of an agricultural working machine (18, 10) on the basis of signals from sensors (70, 74, 82), comprising:
one or more sensors (70, 74, 82) for providing in each case an output value for a current parameter of a component of the working machine (18, 10),
and a processing unit (88) which is connected to the sensors (70, 74, 82) and is programmed to derive the operating state of the working machine (18, 10) on the basis of the measured values from the sensor(s) (70, 74, 82) and/or values derived therefrom using a hidden Markov model (94),
wherein a state transition matrix (A), elements of an emission probability matrix (B) for the probability of an observation being caused by a particular state and a vector (Π) for describing an input state can be applied to the processing unit (88) in order to derive the operating state (S) of the working machine (18, 10) therefrom, and the derived operating state can be displayed to an operator on a display panel of an operator input device (68) and/or is used to control components of the working machine (18, 10),
**characterized in that**
the processing unit (88) is programmed to derive elements of the emission probability matrix (B) from the measured values from the sensor(s) (70, 74, 82),
and **in that** the processing unit (88) is programmed to select a model for the respective operating mode of the working machine (18, 10), on the basis of measured values from sensors (70, 74, 82) and a position determination system (62), from models for field work, road travel, maintenance and approach to a headland and to select the state transition matrix (A) and/or the vector (Π), on the basis of the selected model for the operating mode, from a database which stores different state transition matrices (A) and/or vectors (Π) for different operating modes of the working machine (18, 10).

2. Device according to Claim 1, wherein the processing unit (88) is programmed to derive the elements of the emission probability matrix (B) from fuzzified measured values from sensors (70, 74, 82) which can be supplied to the hidden Markov model (94) as an observation.

3. Device according to Claim 1 or 2, wherein the processing unit (88) is programmed to derive the elements of the emission probability matrix (B) from measured values from a sensor state monitoring means for capturing the state of sensors and/or a device for monitoring an operator.

4. Device according to one of Claims 1 to 3, wherein the processing unit (88) is programmed to calculate elements of the state transition matrix (A) during operation.

5. Device according to one of Claims 1 to 4, wherein the processing unit (88) is programmed to carry out a tracking step (backtracking step) for evaluating the hidden Markov model for determining the operating state of the working machine (18, 10) only when a different state transition matrix (A) and/or a different vector (Π) has/have been selected since a previous tracking step.

6. Device according to Claim 5, wherein the processing unit (88) is programmed to determine the time of the tracking step on the basis of the diagonal elements of the state transition matrix (A).

7. Agricultural working machine (18, 10) having a device according to one of the preceding claims.

8. Working machine according to Claim 7 in the form of a tractor (18) having an implement (10) or in the form of a harvester.

## Revendications

1. Dispositif de déduction de l'état de fonctionnement d'une machine de travail agricole (18, 10) sur la base de signaux de capteurs (70, 74, 82), ledit dispositif comprenant :
un ou plusieurs capteurs (70, 74, 82) destinés à produire chacun une valeur de sortie relative à un paramètre actuel d'un composant de la machine de travail (18, 10), et une unité de traitement (88) qui est reliée aux capteurs (70, 74, 82) et qui est programmée pour déduire l'état de fonctionnement de la machine de travail (18, 10) sur la base des valeurs de mesure du ou des capteurs (70, 74, 82) et/ou des valeurs qui sont déduites de celles-ci à l'aide d'un modèle de Markov à états cachés (94),
l'unité de traitement (88) pouvant être soumise à une matrice de transition d'état (A), des éléments d'une matrice de probabilité d'émission (B) destinée à la probabilité qu'une observation soit conditionnée par un état déterminé, et un vecteur (π) destiné à décrire un état d'entrée afin d'en déduire l'état de fonctionnement (S) de la machine de travail (18, 10) et l'état de fonctionnement déduit pouvant être présenté à un opérateur sur un panneau de présentation d'un dispositif d'entrée d'opérateur (68) et/ou servant à commander des composants de la machine de travail (18, 10), **caractérisé en ce que** l'unité de traitement (88) est programmée pour déduire des éléments de la matrice de probabilité d'émission (B) à partir des valeurs de mesure du ou des capteurs (70, 74, 82), et **en ce que** l'unité de traitement (88) est programmée pour sélectionner un modèle pour le mode de fonctionnement respectif de la machine de travail (18, 10) sur la base de valeurs de mesure de capteurs (70, 74, 82) et d'un système de détermination de position (62) parmi les modèles pour les travaux dans les champs, les déplacements routiers, l'entretien et l'approche d'une tournière et pour sélectionner la matrice de transition d'état (A) et/ou le vecteur (π) sur la base du modèle sélectionné pour le mode de fonctionnement dans une base de données dans laquelle différentes matrices de transition d'état (A) et/ou différents vecteurs (π) pour différents modes de fonctionnement de la machine de travail (18, 10) sont mémorisés.

2. Dispositif selon la revendication 1, l'unité de traitement (88) étant programmée pour déduire les éléments de la matrice de probabilité d'émission (B) à partir de valeurs de mesure floues de capteurs (70, 74, 82) qui peuvent être amenées comme observation au modèle de Markov à états cachés (94).

3. Dispositif selon la revendication 1 ou 2, l'unité de traitement (88) étant programmée pour déduire les éléments de la matrice de probabilité d'émission (B) à partir de valeurs de mesure d'une surveillance d'état de capteur pour détecter l'état de capteurs et/ou d'un dispositif de surveillance d'un opérateur.

4. Dispositif selon l'une des revendications 1 à 3, l'unité de traitement (88) étant programmée pour calculer des éléments de la matrice de transition d'état (A) pendant le fonctionnement.

5. Dispositif selon l'une des revendications 1 à 4, l'unité de traitement (88) étant programmée pour effectuer une étape de suivi (backtracking) afin d'évaluer le modèle de Markov à états cachés pour déterminer l'état de fonctionnement de la machine de travail (18, 10) uniquement si une autre matrice de transition d'état (A) et/ou un autre vecteur (π) a été sélectionné depuis une étape de suivi précédente.

6. Dispositif selon la revendication 5, l'unité de traitement (88) étant programmée pour déterminer l'instant de l'étape de suivi en fonction des éléments diagonaux de la matrice de transition d'état (A).

7. Machine de travail agricole (18, 10) comprenant un dispositif selon l'une des revendications précédentes.

8. Machine de travail selon la revendication 7 se présentant sous la forme d'un tracteur (18) équipé d'un outil (10) ou sous la forme d'une moissonneuse.
